# EUROPÄISCHE PATENTSCHRIFT

(11) **EP 3 754 444 B1**
(45) Veröffentlichungstag und Bekanntmachung des Hinweises auf die Patenterteilung: **11.10.2023**
(21) Anmeldenummer: 20179250.4
(22) Anmeldetag: 10.06.2020
(51) Int. Cl.: G05B 19/418, B25J 9/16

(54) **VERFAHREN ZUM WECHSELN EINES AGGREGATES AN EINER VERPACKUNGSSTRASSE SOWIE HIERFÜR AUSGELEGTE VERPACKUNGSSTRASSE**
METHOD FOR CHANGING AN AGGREGATE ON A PACKAGING LINE AND PACKAGING LINE DESIGNED FOR THIS
PROCÉDÉ DE MODIFICATION D'UN AGRÉGAT SUR UNE CHAÎNE D'EMBALLAGE AINSI QUE CHAÎNE D'EMBALLAGE ASSOCIÉE

(30) Priorität: 18.06.2019 DE 102019116523
(43) Veröffentlichungstag der Anmeldung: 23.12.2020
(73) Patentinhaber: Gerhard Schubert GmbH, 74564 Crailsheim (DE)
(72) Erfinder: SCHUBERT, Gerhard, 74564 Crailsheim (DE)
(74) Vertreter: Weickmann & Weickmann PartmbB

(56) Entgegenhaltungen:
- DE-A1-102009 044 163
- DE-A1-102010 041 389
- DE-A1-102015 216 906

## Beschreibung

### I. Anwendungsgebiet

Die Erfindung betrifft Verpackungsstraßen, in denen mehrere hintereinander angeordnete Roboter Produkte in Verpackungen, meist Behälter, z.B. sogenannte Trays, umsetzen.

### II. Technischer Hintergrund

Eine Verpackungsstraße umfasst in aller Regel ein Produktband, auf dem die umzusetzenden Produkte angeliefert werden, und meist auch ein Behälter-Band, auf dem die leeren Behälter angeliefert und gefüllt mit Produkten abtransportiert werden.

Zumindest eines davon, vorzugsweise beide, verlaufen innerhalb der Verpackungsstraße in einer Durchlaufrichtung, die in Längsrichtung der Verpackungsstraße, also in Richtung deren größter Erstreckung, verläuft, sodass die Durchlaufrichtung der Produkte einerseits und/oder der Behälter andererseits sich mit der Längsrichtung der Verpackungsstraße deckt.

Erst dadurch wird es möglich, mehrere Roboter in dieser Längsrichtung hintereinander - und häufig auch bzgl. der Längsmitte der Verpackungsstraße einander gegenüberliegend in zwei Reihen - anzuordnen, die die Produkte in die Behälter umsetzen.

Eine Verpackungsstraße kann darüber hinaus auch weitere Aggregate außer den Robotern enthalten, die auch nicht am Roboter, sondern insbesondere am Grundgestell befestigt sind, beispielsweise Bearbeitungseinheiten wie Schweiß-, Klebe- oder Siegel-Aggregate, oder auch nicht bewegliche Aggregate, wie beispielsweise eine Steuereinheit, die in Form eines Rack-Einschubes Teile oder die gesamte elektronische Steuerung der Roboterstraße enthält.

Daneben enthält eine solche Verpackungsstraße Aggregate in Form von Antriebsaggregaten wie etwa Motor-Getriebe-Einheiten, hydraulische Aggregate wie etwa Hydraulikpumpen, oder pneumatische Aggregate wie etwa Überdruck- oder Unterdruck-Pumpen.

Im Laufe des Betriebs einer solchen Verpackungsstraße ist es immer notwendig, einzelne dieser Aggregate zu wechseln, sei es, weil ein Aggregat, insbesondere ein Roboter, defekt ist und gewechselt werden muss, oder weil aufgrund einer neuen Verpackungsaufgabe ein solcher Wechsel sinnvoll ist.

Gerade die Roboter wurden bisher manuell gewechselt, indem die datentechnischen und energietechnischen Anschlüsse, die meist eine Schraubverbindung umfassten, manuell gelöst und auch die mechanische Befestigung des Roboters am Grundgestell oder einem vom Grundgestell getragenen Tragwerk manuell gelöst und der Roboter manuell abtransportiert und ebenso manuell durch einen neuen Roboter ersetzt wurde.

Zum einen ist hierfür geschultes Personal notwendig, zum anderen benötigt dies viel Zeit und enthält potenzielle Fehlerquellen.

Vor allem aber muss für ein solches Arbeiten eines oder mehrerer Bediener innerhalb der Verpackungsstraße diese in aller Regel insgesamt stillgesetzt werden, was zu hohen Ausfallzeiten führt.

Verpackungsstraßen besitzen aus Reinigungsgründen heute meist ein aufgeständertes Grundgestell, indem aufrecht stehende Tragsäulen am oberen Ende durch Längs- und Quertraversen verbunden sind, die gemeinsam das Grundgestell bilden.

Von diesem Grundgestell werden alle darin verbauten Aggregate getragen, wobei insbesondere die Roboter meist nicht direkt am Grundgestell, sondern an einem daran befestigten oberen Tragwerk aus Längs- und/oder Quertraversen befestigt sind.

Da sich dieses obere Tragwerk im oberen Bereich des Grundgestells befindet, können die Roboter hängend befestigt werden, also mit ihrer Basis am Tragwerk und mit ihrem einen oder mehreren Roboterarmen nach unten hängend, um die im unteren Bereich auf dem Produktband laufenden Produkte ergreifen und in die daneben, ebenfalls im unteren Bereich, meist auf einem Behälterband befindlichen Verpackungen oder Trays einsetzen zu können.

Auch Produktband und Behälterband sind mittels eines unteren Tragwerks in der Regel im Abstand über dem Boden, etwa in Tischhöhe, befestigt, sodass der Raum darunter frei bleibt und leicht gereinigt werden kann. In diesem Zusammenhang ist das automatische Wechseln eines Werkzeuges bekannt, z.B. aus der DE 10 2015 216 906 sowie der DE 102009044163 A1.

### III. Darstellung der Erfindung

### a) Technische Aufgabe

Es ist daher die Aufgabe der Erfindung, ein Verfahren zum schnellen und wenigstens teilweise automatischen Wechseln eines Roboters an einer Verpackungsstraße zur Verfügung zu stellen, welches vorzugsweise auch keine Stilllegung der gesamten Verpackungsstraße während des Wechsels erfordert, sowie eine hierfür geeignete Verpackungsstraße.

### b) Lösung der Aufgabe

Diese Aufgabe wird durch die Merkmale der Ansprüche 1 und 8 gelöst. Vorteilhafte Ausführungsformen ergeben sich aus den Unteransprüchen.

Hinsichtlich des Verfahrens wird diese Aufgabe gemäß Anspruch 8 dadurch gelöst, dass sowohl beim Entfernen des alten Roboters dessen mechanische Fixierung sowie dessen Energieanschluss und Datenanschluss zum Rest der Verpackungsstraße automatisch gelöst wird oder bei einem eingebrachten neuen Roboter automatisch mit der Verpackungsstraße verbunden.

Das Einbringen des neuen Roboters in die Verpackungsstraße erfolgt vorzugsweise bis zu einer Übergabe-Position, und wird - abhängig vom Gewicht des Roboters manuell oder mit Hilfe einer Liefer-Vorrichtung - durchgeführt, die das Aggregat trägt und in die Verpackungsstraße einbringt, insbesondere hineinschiebt.

Einer der Hauptvorteile des im folgenden beschriebenen Roboter-Austausches besteht darin, dass nach automatischem Lösen der Verbindungen der Roboter automatisch und mannlos dem Grundgestell entnommen und auf Arbeitshöhe abgesenkt werden kann, sodass also kein Monteur auf der Oberseite des Grundgestells herumklettern muss, um dortige Verbindungen zu lösen und/oder Reparaturen am montierten Roboter durchzuführen.

Reparaturen am Roboter werden entweder abseits in einer separaten Werkstatt durchgeführt, zumindest aber neben der Verpackungsstraße an dem auf Arbeitshöhe herabgelassenen Roboter, oder der fehlerhafte Roboter geht im defekten Zustand zurück an den Hersteller.

Eine solche Liefer-Vorrichtung kann manuell bedient werden oder auch den Liefer-Vorgang automatisch vollziehen. Vorzugsweise ist die Liefer-Vorrichtung ein selbstfahrendes Fahrzeug, welches beispielsweise auf dem Untergrund oder einem Traggestell unter der Hallendecke, in der sich die Verpackungsstraße befindet, verfahren werden kann.

Theoretisch könnte die Liefer-Vorrichtung auch entlang des Grundgestells der Verpackungsstraße verfahrbar befestigt sein, jedoch sollte dies nicht zu einer Vergrößerung der Gesamthöhe der Verpackungsstraße führen.

Es versteht sich von selbst, dass bereits während des Lösens der mechanischen Fixierung zwischen dem Roboter und dem Rest der Verpackungsstraße und während des gesamten Zeitraumes, indem diese mechanische Verbindung gelöst ist, der Roboter abgestützt werden muss, beispielsweise von einer Liefer-Vorrichtung getragen werden muss oder auf den Liefer-Führungen der Verpackungsstraße aufliegen muss.

Dabei kann die Übergabe-Position, an der der neue Roboter an oder in der Verpackungsstraße abgesetzt wird, insbesondere von der Liefer-Vorrichtung abgesetzt wird, gleichzeitig die endgültige Montage-Position sein, in aller Regel sind diese beiden Positionen jedoch verschieden.

Somit muss das neue Aggregat zuerst von einer an der Verpackungsstraße befestigten Verlagerungs-Vorrichtung von der Übergabe-Position zur Montage-Position verlagert werden, da erst dort die Kopplung von Datenanschluss und Energieanschluss zwischen dem neuen Roboter und der Verpackungsstraße durchgeführt wird und auch die mechanische Fixierung, vorzugsweise nach vorhergehender exakter Positionierung.

Denn die exakte Positionierung des neuen. Roboters, in der Verpackungsstraße ist für die Steuerung unerlässlich, da hiervon ausgehend alle Bewegungen des Roboters berechnet und festgelegt werden.

In diesem Zusammenhang sei erwähnt, dass in der Regel die Zentral-Steuerung der Verpackungsstraße nur das Programm für den jeweiligen Verpackungs-Auftrag an die jeweiligen Sub-Steuerungen (VMS) verteilt, die jeweils eine Gruppe von Robotern steuern, alle weiteren Steuerungsaufgaben dagegen den Sub-Steuerungen überlassen sind, die jeweils eine Gruppe von Robotern steuern.

Um den vorgesehenen Roboter an die vorgesehene Montageposition zu bringen, weist vorzugsweise jede Montage-Position für Roboter eine eigene Kennung, insbesondere Kenn-Nummer, auf und/oder ebenfalls jeder Roboter, sodass die Zentral-Steuerung oder Sub-Steuerung einen eindeutigen Wechselauftrag aufgrund Eingabe der entsprechender Kenn-Nummern durch den Bediener und/oder Fehlermeldungen von den entsprechenden Kenn-Nummern durchführen kann.

Das Entnehmen des alten Roboters und/oder das Einbringen des neuen Roboters erfolgt vorzugsweise quer zur Längsrichtung der Verpackungsstraße, wobei diese beiden Vorgänge in entgegengesetzten Querrichtungen durchgeführt werden.

Vorzugsweise erfolgen diese Vorgänge, insbesondere der Einbringungsvorgang, durch Verschieben des Aggregats entlang von Liefer-Führungen, die in dieser Liefer-Richtung verlaufen, also vorzugsweise quer zur Längsrichtung, der Durchlaufrichtung der Verpackungsstraße.

Die Übergabe-Position wird dann vorzugsweise durch einen in Anliefer-Richtung wirksamen Anlieferanschlag vorgegeben, sodass bei Kontaktieren dieses Anschlages der neue Roboter beispielsweise von der Liefer-Vorrichtung automatisch an der damit erreichten Übergabe-Position abgesetzt wird.

Die Verlagerung zwischen der Übergabe-Position und der Montage-Position erfolgt - sofern diese nicht identisch sind - vorzugsweise in eine Richtung, die quer zur Lieferrichtung verläuft und z.B. in Längsrichtung gerichtet sein kann oder vorzugsweise auch zu dieser quer verlaufen kann.

In einer bevorzugten Form werden die Roboter beim An- und Abliefern in der horizontalen Querrichtung bis zu einer Übergabe-Position an oder in der Verpackungsstraße bewegt, zwischen der Übergabe-Position und der Montage-Position jedoch vertikal bewegt. Vorzugsweise befindet sich die Montage-Position vertikal über der Übergabe-Position.

An der Montage-Position wird der neue Roboter zunächst exakt positioniert, vorzugsweise mittels mechanischer Positionierelemente, und erst dann mechanisch fixiert.

Falls der zu wechselnde Roboter, sei es das neue oder das alte Aggregat, unterschiedliche räumliche, körperliche Zustände einnehmen kann, beispielsweise auseinander geklappt oder zusammengeklappt werden kann, wird es für den Entnahmevorgang und/oder den Einbringungsvorgang zuvor in einen kompakten Zustand, insbesondere seinen kompaktesten Zustand, verbracht, in dem dieser Roboter in mindestens einer Raumrichtung, vorzugsweise in allen Raumrichtungen, seine geringstmöglichen Abmessungen aufweist. Dadurch wird die Gefahr von Kollisionen mit anderen Bauteilen der Verpackungsstraße bei dem Wechselvorgang minimiert.

Wird ein Roboter gewechselt, wird also dessen Roboterarm möglichst kompakt zusammengefaltet.

Der gesamte Wechselvorgang wird vorzugsweise so durchgeführt, dass während des Wechselvorganges die Verpackungsstraße in Betrieb bleiben kann und lediglich der zu wechselnde Roboter deaktiviert ist. Insbesondere wird das zu wechselnde Aggregat ab Beginn des Wechselvorganges nicht mehr mit Energie versorgt und auch nicht mehr mit Daten versorgt.

Vorzugsweise wird nach der Montage des neuen Roboters mittels eines Prüfprogramms die Einsatzbereitschaft des neuen Roboters überprüft.

Auch eine Überprüfung der tatsächlichen Montage-Position des neu montierten Roboters kann durchgeführt werden.

Eine für die Durchführung geeignete Verpackungsstraße umfasst gemäß Anspruch 1 zunächst einmal die üblichen Bestandteile wie ein Grundgestell, in Durchlaufrichtung hintereinander mehrere Roboter, die direkt oder indirekt an dem Grundgestell befestigt sind und eine Steuerung, die zumindest alle Roboter steuert, darüber hinaus auch alle anderen beweglichen Elemente der Verpackungsstraße.

Erfindungsgemäß weist eine solche Verpackungsstraße gemäß Anspruch 1 darüber hinaus eine Montage-Vorrichtung zum wenigstens teilweise automatischen Montieren und Demontieren des Roboters - der eine Roboter-Basis und einen daran befestigten Roboter-Arm umfasst - an einer definierten Montage-Position auf sowie des Weiteren eine Koppel-Vorrichtung zum automatischen Koppeln und Entkoppeln des Datenanschlusses und/oder des Energieanschlusses des zu wechselnden Roboters, mit den entsprechenden Gegen-Anschlüssen der Verpackungsstraße.

Zusätzlich muss die Steuerung in der Lage sein, die für den Wechselvorgang eines Aggregates notwendigen Vorgänge zu steuern, die von Seiten der Verpackungsstraße aus durchgeführt werden müssen.

Hierzu umfasst die Steuerung vorzugsweise auch ein Testprogramm, mit dem das automatisch eingebrachte und montierte Aggregat auf seine vollständige Funktionsfähigkeit getestet werden kann, bevor es in den regulären Betrieb gelangt und/oder auch seine korrekte Montageposition geprüft werden kann.

Dann ist es zumindest möglich, dass - sobald der neue Roboter die Montage-Position erreicht hat - dieses automatisch an der Verpackungsstraße zu fixieren und die genannten Anschlüsse miteinander zu verbinden.

Zu diesem Zweck umfasst die Montage-Vorrichtung vorzugsweise zum Einen eine Positionier-Vorrichtung zum exakten automatischen Positionieren an der Montage-Position, beispielsweise unter Zuhilfenahme von mechanischen Positionier-Elementen wie etwa Zentrierzapfen, die in entsprechende Zentriervertiefungen des jeweils anderen Bauteiles eingefahren werden. Die gegeneinander zu positionierenden Bauteile sind also Grundgestell oder ein anderes tragendes Teil der Verpackungsstraße einerseits und der Roboter, andererseits.

Vorzugsweise umfasst die Montage-Vorrichtung auch eine Fixier-Vorrichtung zum automatischen mechanischen Fixieren des Roboters, insbesondere nachdem es an der Montage-Position automatisch exakt positioniert wurde.

Falls die Montage-Position und die Übergabe-Position nicht identisch sind, umfasst die Montage-Vorrichtung vorzugsweise auch eine Verlagerungs-Vorrichtung, insbesondere eine Hub-Vorrichtung, mit der der Roboter zwischen einer Übergabe-Position und der Montage-Position automatisch verlagert werden kann.

Vorzugsweise umfasst das Grundgestell Liefer-Führungen, die in Lieferrichtung verlaufen, entlang denen das zu wechselnde Aggregat verschoben werden kann, beispielsweise beim Einbringen von außen und Einschieben bis zu einer Übergabe-Position, die sich vorzugsweise innerhalb der Verpackungsstraße befindet.

Vorzugsweise gibt es einen Übergabe-Anschlag, gegen den der einzubringende Roboter stößt, wenn es entlang der Liefer-Führungen eingebracht wird, und welcher die Übergabe-Position definiert.

Das Grundgestell ist vorzugsweise aufgeständert.

Bevorzugt besteht deshalb das Grundgestell aus aufrechten Tragsäulen, die in ihrem oberen Bereich, vorzugsweise an ihrem oberen Ende, durch Längstraversen und Quertraversen miteinander verbunden sind und die zusammen das Grundgestell bilden.

Die Roboter werden dann entweder direkt an den Längstraversen und/oder Quertraversen befestigt, vorzugsweise jedoch indirekt mittels eines Tragwerks, welches an den Längs- und Quertraversen befestigt ist, wobei die Roboter hängend befestigt werden, also die Roboterbasis an den Traversen oder dem Tragwerk befestigt sind und von der Roboterbasis der wenigstens eine Roboterarm nach unten weist.

Vorzugsweise ist das Grundgestell, insbesondere die zuvor beschriebene Bauform des Grundgestells, modulartig aufgebaut, sodass insbesondere ein Gestell-Modul in der Aufsicht betrachtet aus vier im Rechteck angeordneten aufrechten Tragsäulen sowie diese im oberen Bereich, insbesondere am oberen Ende verbindende je zwei Längstraversen und je zwei Quertraversen besteht.

Das in der Verpackungsstraße üblicherweise vorhandene Produktband und/oder Behälterband sind dagegen darunter und tieferliegend auf Arbeitshöhe montiert, meist auf einem unteren Tragwerk aus Längsstreben und Querstreben, welches mit den aufrechten Tragsäulen verbunden ist.

### c) Ausführungsbeispiele

Ausführungsformen gemäß der Erfindung sind im Folgenden beispielhaft näher beschrieben. Es zeigen:

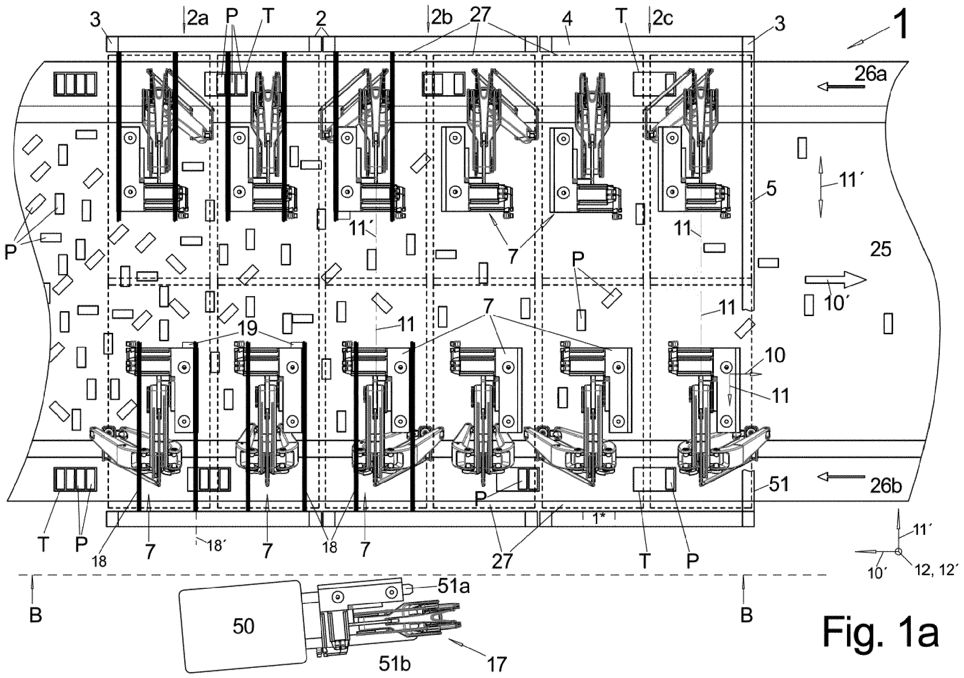

- **Figur 1a:**: eine Verpackungsstraße in der Aufsicht,

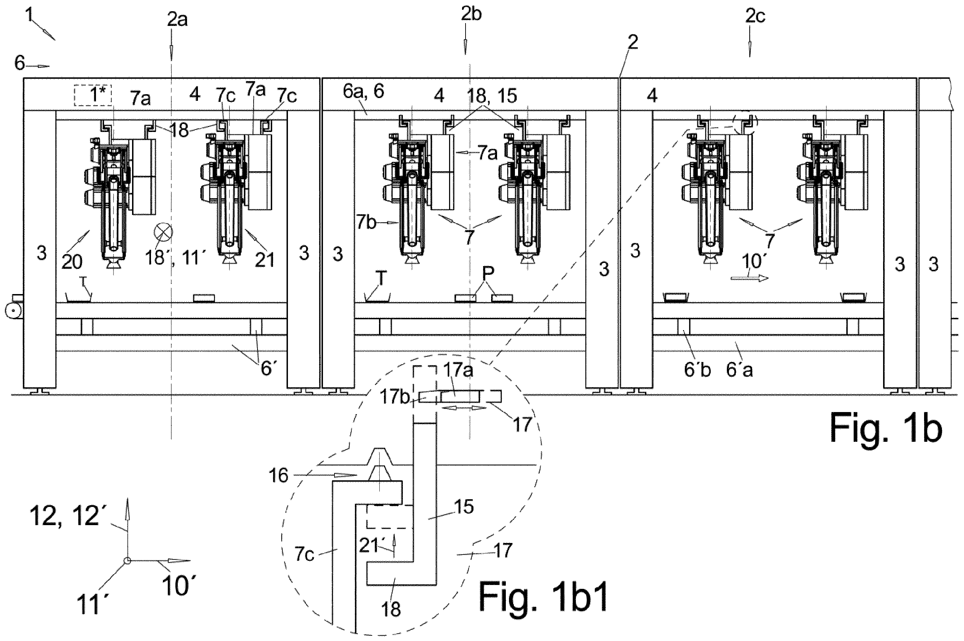

- **Figur 1b:**: die Verpackungsstraße der Figur 1a in der Seitenansicht, also quer zu deren Durchlaufrichtung,

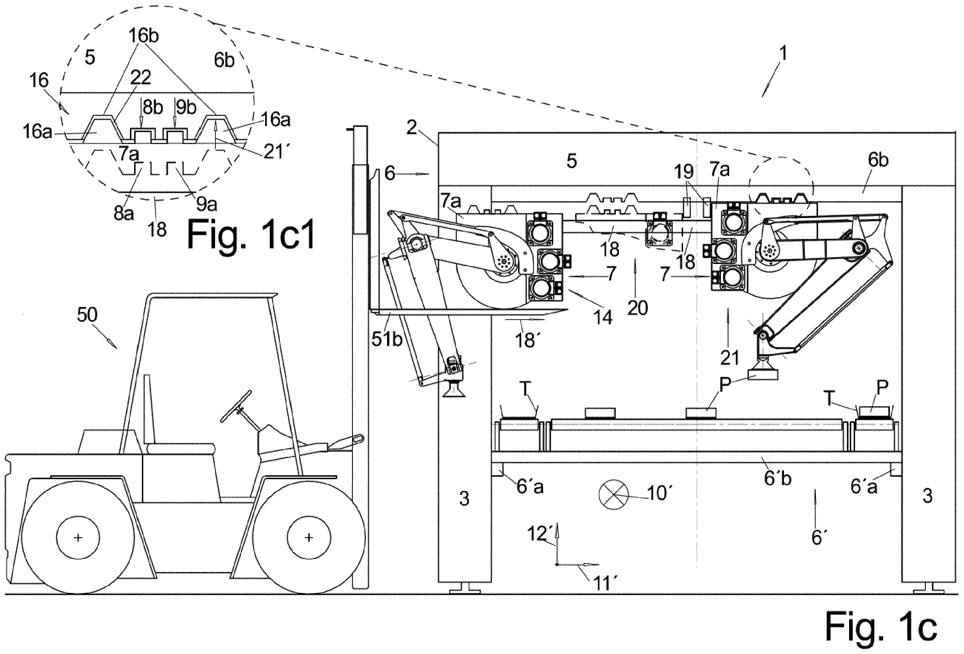

- **Figur 1 b1:**: eine Vergrößerung aus Figur 1b,
- **Figur 1c:**: die Verpackungsstraße betrachtet in Durchlaufrichtung,
- **Figur 1c1:**: eine Vergrößerung aus Figur 1c,
- **Figur 2a:**: eine andere Verpackungsstraße in perspektivische Ansicht,
- **Figur 2b:**: die Verpackungsstraße gemäß Figur 2a in der Aufsicht,
- **Figur 2c:**: die Verpackungsstraße gemäß Figur 2a ohne Sicherheitstüren in der Seitenansicht,
- **Figur 2d:**: die Verpackungsstraße gemäß Figur 2a betrachtet in Durchlaufrichtung
- **Figur 3a** - **d:**: das Wechseln eines Roboters dargestellt an einem einzelnen Gestell-Modul der Verpackungsstraße gemäß Figur 2a in perspektivische Ansicht, Aufsicht von oben, betrachtet in Durchlaufrichtung, sowie in der Seitenansicht,
- **Figur 4:**: eine Einzeldarstellung des in den Figuren 2 und 3 dargestellten Roboters in perspektivische Ansicht,
- **Figur 5:**: eine Einzeldarstellung eines anderen Roboters in perspektivische Ansicht

Die **Figuren 1a****,** **b****,** **c** zeigen zunächst einmal eine bekannte Verpackungsstraße, mit deren Hilfe Produkte P in bereitstehende Behälter, sogenannte Trays T, mit Hilfe von Robotern 7 umgesetzt werden sollen.

Zu diesem Zweck werden die Produkte P ungeordnet verteilt auf einem Förderband, dem sogenannten Produktband 25, in Durchlaufrichtung 10' herantransportiert, während die leeren Trays T auf in diesem Fall zwei, auf jeweils einer der Längsseiten des Produktbandes 25 parallel, jedoch in Gegenrichtung zu diesem verlaufenden. Förderbändern, den Behälterbändern 26a, b herantransportiert werden.

In Durchlaufrichtung 10' hintereinander und in Querrichtung 11' der Verpackungsstraße 1 in zwei Reihen nebeneinander sind jeweils mehrere Roboter 7 über Produktband 25 und Behälterbändern 26a, b angeordnet, wobei deren jeweiliger, in der Aufsicht betrachteter, Arbeitsbereich 27 jeweils einen in Durchlaufrichtung 10' definierten Längenbereich eines der Behälterbänder 26a, b abdeckt sowie einen sich daran in Querrichtung anschließenden Bereich des Produktbandes 25, der bis mindestens zur Längsmitte des Produktbandes 25 reicht.

Jeder Roboter kann damit die in seinem Arbeitsbereich 27 befindlichen, auf dem Behälterband 25 liegenden Produkte P einzeln oder gruppenweise aufnehmen und in den auf dem entsprechendem Behälterband 26a, b sich bewegenden Tray T ablegen, wobei sich die Bänder 25, 26a, b in aller Regel ständig, vorzugsweise konstant, bewegen.

Dementsprechend ist - wie in **Figur 1a** ersichtlich - am in Durchlaufrichtung 10' einlaufseitigen Ende das Produktband 25 mit vielen Produkten P besetzt und es sind am Ende des Umsetzbereiches, in dem sich die Roboter 7 befinden, idealerweise keine Produkte mehr auf dem Produktband vorhanden. Umgekehrt sind die Trays T bei ihrem Eintritt in den Umsetzbereich leer und verlassen diesen Umsetzbereich vorzugsweise nur in einem vollständig mit Produkten P gefüllten Zustand.

Wie ebenfalls bekannt, sind die Roboter 7 von oben herabhängend am Grundgestell 2 der Verpackungsstraße 1 befestigt, also mit ihrer Roboterbasis 7a, an der der Roboter-Arm 7b befestigt ist, am Grundgestell 2 befestigt, wie in **Figur 1b****,** **1c** ersichtlich.

In diesem Fall besteht das Grundgestell 2 aus mehreren sich in Durchlaufrichtung 10' hintereinander kontaktierend oder in geringem Abstand anschließenden Gestell-Modulen 2a, b, c, von denen jedes in der Aufsicht betrachtet - wie am besten in **Figur 1a** zu erkennen - aus vier in einem Rechteck angeordneten vertikalen Tragsäulen 3 besteht, die in Längsrichtung 10', also der Durchlaufrichtung 10', paarweise über je eine Längstraverse 4 und die in gleicher Längsposition befindlichen Paare von Tragsäulen 3 über je eine von zwei Quertraversen 5 miteinander verbunden sind.

Die Roboter 7 - von denen hier in Längsrichtung zwei hintereinander und in Querrichtung 11' einander gegenüber liegend je zwei, also insgesamt vier Roboter 7 pro Gestellmodul z.B. 2b vorhanden sind - sind dabei vorzugsweise nicht direkt am Grundgestell aufgehängt, sondern an einem oberen Tragwerk 6, welches seinerseits am Grundgestell 2, insbesondere dessen Quertraversen 5 und/oder Längstraversen 6a, meist knapp darunter, befestigt ist und beispielsweise in Längsrichtung 10' verlaufende Längstraversen 6a umfasst, ggfs. auch Quertraversen 6b, wie in **Figur 1c** dargestellt.

Ebenso sind das unterhalb der Roboter verlaufende Produktband 25 und die innerhalb des Grundgestells 2 parallel dazu verlaufenden Behälterbänder 26a, b vorzugsweise ebenfalls nicht direkt am Grundgestell 2 sondern an einem unteren Tragwerk 6' befestigt, welches vom Untergrund beabstandet, jedoch auf einer Höhe unterhalb der Roboter 7, meist etwa in Kniehöhe bis Hüfthöhe eines danebenstehenden Bedieners, am Grundgestell 2 befestigt ist.

Das untere Tragwerk 6' umfasst in diesem Fall in Längsrichtung 10' verlaufende Längstraversen 6'a, die vorzugsweise über die gesamte Länge von Produktband 25 und/oder Behälterbändern 26a, b durchgehen, und Quertraversen 6'b, die in Querrichtung 11' über die gesamte Breite des Grundgestells 2, jedenfalls über die Breite beider Reihen von daran befestigten Robotern 7, und auch die Gesamtbreite der nebeneinander angeordneten Bänder 25, 26a, b durchgehen.

Die die gesamte Verpackungsstraße 1 steuernde Steuerung 1* ist meist in einer der hohlen Längstraversen 4 angeordnet, ebenso wie weitere elektrische, hydraulische oder pneumatische Aggregate.

Zur Erläuterung, wie das erfindungsgemäß beabsichtigte, wenigstens teilweise automatische Auswechseln eines Aggregates ablaufen kann, ist dies anhand eines Roboters 7 als Aggregat dargestellt, wobei auch Aggregate wie die erwähnten hydraulischen, pneumatischen oder elektrischen Aggregate analog zu Robotern 7 wenigsten teilweise automatisch gewechselt werden können.

Zum Wechseln eines Roboters 7 soll der zu entfernende Roboter 7 - wie **Figur 1c** zeigt - nach dem Lösen von der Verpackungsstraße 1 in Querrichtung 11' aus der Verpackungsstraße 1 entfernt werden und in der entgegengesetzten Querrichtung der neue einzusetzende Roboter 7 in Lieferrichtung 18' angeliefert, in das Grundgestell 2 eingebracht und dort an der richtigen Montageposition am Grundgestell 2 fixiert und angekoppelt werden.

Das Aufnehmen und Abtransportieren des zu wechselnden Roboters 7 als auch das Anliefern des neuen Roboters 7 erfolgt mit einer Liefervorrichtung 50, hier in Form einer von einem Bediener manuell zu fahrenden Liefervorrichtung, beispielsweise Gabelstaplers 50, der hier mit konventionellen Hubzinken 51a, bausgestattet ist, die jedoch - nicht dargestellt - zur Aufnahme eines zu transportierenden Roboters 7 speziell mit darauf abgestimmten Halteelementen ausgestattet sein kann.

In **Figur 1c** ist beispielsweise das Anliefern des neuen Roboters 7 dargestellt, der auf den in der Höhe relativ zum Gabelstapler 50 verfahrbaren Hubzinken 51a, b mit seiner Roboter-Basis 7a aufliegt, wobei der Roboter 7 mit seiner Querrichtung 11 - die in dem in der Verpackungsstraße 1 montierten Position der Querrichtung 11' der Roboterstraße 1 entspricht - etwa in Verlaufsrichtung der Hubzinken 51a, b auf diesen aufliegt, also mit der Längsrichtung 10 des Roboters 7 quer zur Verlaufsrichtung der Hubzinken 51a, b. Die Verlaufsrichtung der Hubzinken 51a, b ist dabei bei der Geradeausfahrt auch die Bewegungsrichtung des Gabelstaplers 50.

Der Gabelstapler 50 oder generell ein die zu wechselnden Roboter 7 transportierendes Lieferfahrzeug kann auch autonom fahren, und wird dann vorzugsweise mittels entsprechender Sensorik geführt, insbesondere beim Einbringen des neuen Roboters 7 in die Verpackungsstraße 1.

Zum wenigstens teilweise automatischen Wechseln und auch automatischen Einbringen eines Roboters 7 ist eine Montage-Vorrichtung 14 vorhanden, die aus mehreren Teilen besteht.

Im vorliegenden Ausführungsbeispiel wird der einzubringende Roboter 7 mit Hilfe des Lieferfahrzeuges, also des Gabelstaplers 50, bis zu einer Übergabe-Position 20 verbracht und dort abgelegt, und - insbesondere nach Entfernen des Lieferfahrzeuges 50 - von dort in eine Montage-Position 21 verbracht, der endgültigen Position des Roboters 7 im Grundgestell 2, in der er nach entsprechendem Anschluss an Energie und Datenversorgung funktionsfähig ist.

Im Ausführungsbeispiel der Figuren 1 ist die Montagevorrichtung 14 - bis auf das benutzte Lieferfahrzeug 50 - vollständig Bestandteil der Verpackungsstraße 1, also im Wesentlichen an jeder potentiellen Roboter-Position in der Verpackungsstraße 1 vorhanden.

Zum Verbringen in die Übergabe-Position 20 sind im oberen Bereich des Grundgestells 2 in Querrichtung 11' verlaufend an jeder potenziellen Roboter-Position am Grundgestell ein Paar von Lieferführungen 18 vorhanden, von denen jede zumindest eine nach oben weisende Auflagefläche und eine seitliche Begrenzungsfläche aufweist, wie in **Figur 1b** und insbesondere der Detailvergrößerungen der **Figur 1b****1** zu entnehmen.

Jeder Roboter 7 weist in seinem oberen Bereich mindestens ein Roboter-Führungsteil 7c auf, welches auf beiden Seiten jeweils eine nach unten gerichtete Auflagefläche aufweist, sodass der Roboter 7 mit seinem wenigstens einen Roboter-Führungsteil 7c - vorliegend sind zwei getrennte Roboter-Führungsteile 7c dargestellt - zwischen die beiden Lieferführungen 18 eingefahren werden kann mit Hilfe des Lieferfahrzeuges 50 und nach Absenken mittels der Hubzinken 51a, b die Auflageflächen der Roboter-Führungsteile 7c auf den Auflageflächen der Lieferschienen 18 aufliegen und gleichzeitig auch in Querrichtung zur Lieferrichtung 18', nämlich in Längsrichtung 10' der Verpackungsstraße 1, seitlich geführt sind.

Dieses Ablegen an der Übergabeposition 20 (Figur 1b ganz links) erfolgt jedoch erst, wenn beim Einschieben mittels des Lieferfahrzeuges 50 der Roboter 7, insbesondere dessen Roboter-Führungsteils 7c, in Querrichtung 11' an einem Liefer-Anschlag 19 anliegt, der die Übergabeposition 20 mit definiert.

Dann befindet sich der Roboter 7 in Querrichtung 11' der Verpackungsstraße 1 bereits an der korrekten Quer-Position, jedoch noch nicht in der richtigen Höhenlage.

Um diese zu erreichen, umfasst die Montage-Vorrichtung 14 ferner eine Verlagerungs-Vorrichtung 15, hier in Form einer Hub-Vorrichtung 15, die den Roboter 7 in einer Montage-Richtung 21', die in diesem Fall die Vertikale 12' ist, anhebt bis zur Montage-Position 21 gemäß **Figur 1c****1.**

Die Verlagerungs-Vorrichtung 15 umfasst in diesem Fall ein Teil der Länge der Liefer-Schienen 18 oder die gesamten Liefer-Schienen 18, auf denen der Roboter 7 aufliegt, welche mittels einer Hub-Vorrichtung 15 als Verlagerungs-Vorrichtung den Roboter 7 soweit anhebt - wie in **Figur 1b****1** dargestellt - dass als Positionier-Vorrichtung 16 die Positionier-Elemente 16a, b ineinander rasten, nämlich Zentrier-Zapfen 16a und Zentrier-Vertiefung 16b, von denen sich vorzugweise nicht nur eine sondern je zwei einerseits an der Roboterbasis 7a in dessen oberen Bereich, insbesondere dem Roboter-Führungsteil 7c, und andererseits an den die Roboter 7 tragenden Teilen des Grundgestells, insbesondere dem oberen Tragwerk 6, befinden.

Der angehobene Zustand des Roboters 7 nach der Übergabe-Position 20 in der Montage-Position 21 mit Hilfe der Liefer-Schienen 18 ist in **Figur 1b** in der dritten und den weiteren Positionen von links beginnend dargestellt sowie der Anhebevorgang in der Vergrößerung der **Figur 1b****1.**

Die in **Figur 1b** zweite Roboter-Position von links zeigt einen bereits in die Montage-Position 21 angehobenen Roboter 7, bei dem jedoch die Liefer-Schienen 18 in unveränderter Höhenlage verbleiben, also die dafür nötige Verlagerungs-Vorrichtung 15 in Form einer Hub-Vorrichtung 15 durch andere Teile bewirkt wird.

Beispielsweise könnte die Hub-Vorrichtung 15 kein Bestandteil des Grundgestells 1 sein, sondern das Anheben ebenfalls durch das externe Liefer-Fahrzeug 50 bewirkt werden, indem dieses nach Einschieben des Roboters 7 zwischen zumindest seitlichen Führungen 18 und Anschlagen am Liefer-Anschlag 19 mittels des Anhebens der Hubzinken 51a, b den Roboter 7 bis in die Montage-Position 21 anhebt.

Vorzugsweise wird durch Erreichen und vorzugsweise Fixieren, insbesondere Verrasten, mittels einer Koppel-Vorrichtung 13 in der Montage-Position 21 nicht nur mittels der Zentrier-Elemente als Positionier-Elemente 16a, b die exakte mechanische Montage-Position 21 erreicht, sondern gleichzeitig gemäß **Figur 1c****1** der am Roboter 7 vorhandene Energie-Anschluss 8a und Daten-Anschluss 9a automatisch in Wirkverbindung gebracht mit den entsprechenden Gegen-Elementen 8b, 9b im Grundgestell 2 oder dem Tragwerk 6, sodass nach Erreichen der Montage-Position 21 der Roboter bereist betriebsbereit ist.

Um die Verlagerungs-Vorrichtung 15, hier die Hub-Vorrichtung 15, auf Dauer vom Gewicht des Roboters zu entlasten und die Zentrier-Elemente und Zentrier -Vertiefungen dauerhaft auf Anschlag zu halten und damit den Roboter 7 immer exakt in der Montage-Position 21, ist ferner eine Fixier-Vorrichtung 17 vorhanden, die vorzugsweise die Höhenlage des Roboters 7 bei diesem Ausführungsbeispiel sichert, wie in **Figur 1b****1** dargestellt:
Vorzugsweise wird dabei ein Fixier-Zapfen 17a - vorzugsweisequer zur Montagerichtung 21', insbesondere in oder entgegen der Durchlaufrichtung 10' der Verpackungsstraße 1 - in eine entsprechende Fixier-Vertiefung 17b hinein verschoben, die sich entweder in dem entsprechenden Teil der Hub-Vorrichtung 15, hier in einem Abschnitt der Liefer-Schiene 18, befindet oder direkt im Roboter 7, insbesondere dem Roboter-Führungsteil 7c.

Vorzugsweise ist der Fixier-Zapfen 17a am vorderen Ende keilförmig mit einer schräg zu seiner Bewegungsrichtung geneigten Fläche nach oben weisenden Schrägfläche ausgestattet, sodass er in der vorgeschobenen Position das Gegen-Element, hier die Unterseite der Ausnehmung, in die der Fixier-Zapfen 17a einfährt, in der maximal erreichbaren Höhenlage hält. Vorzugsweise ist zu diesem Zweck der Fixier-Zapfen 17a kraftgesteuert.

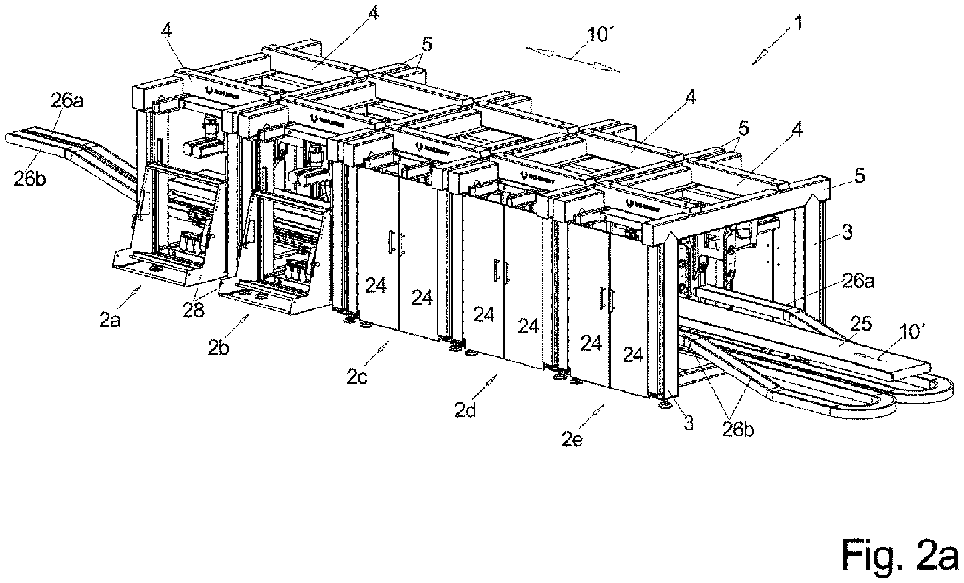

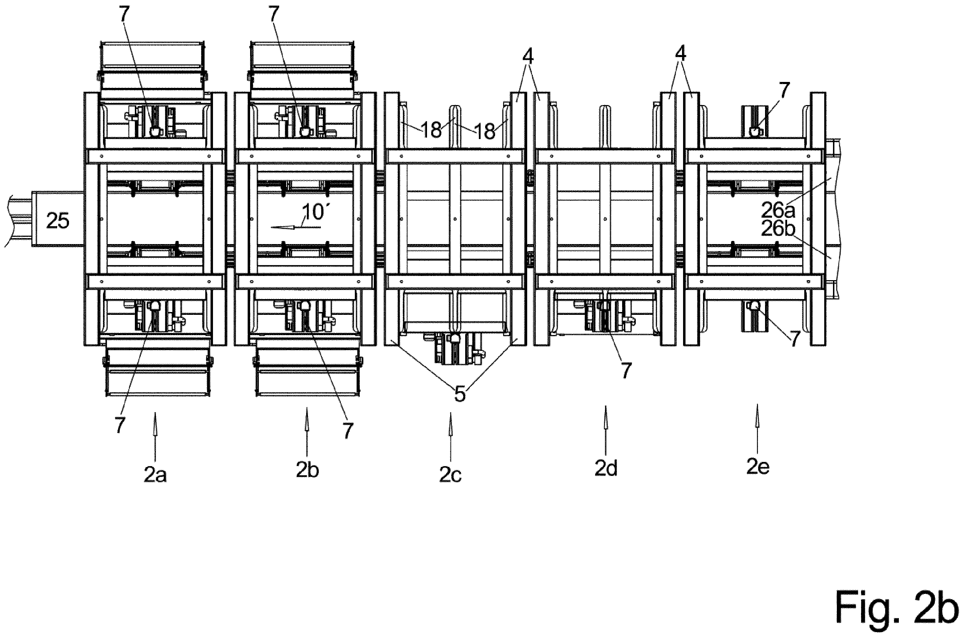

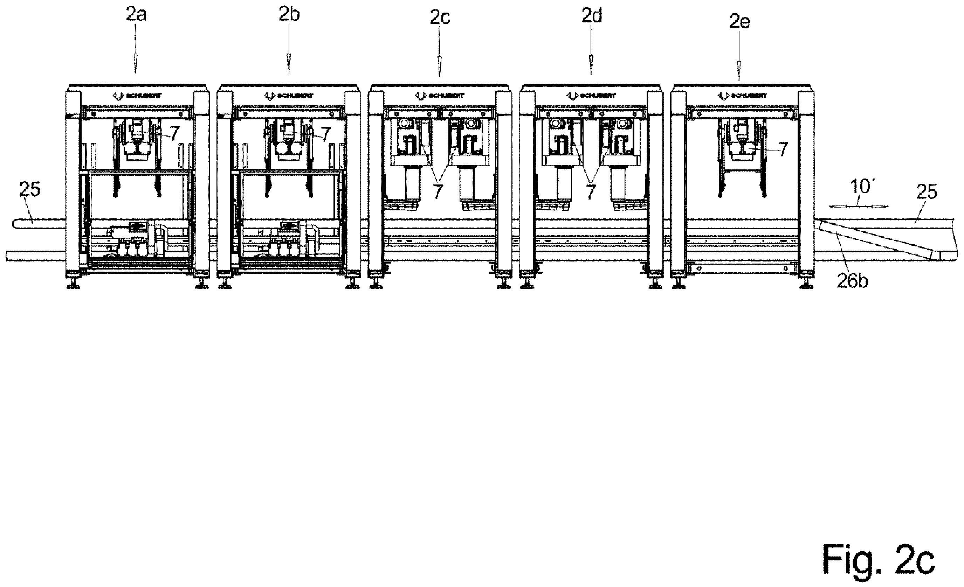

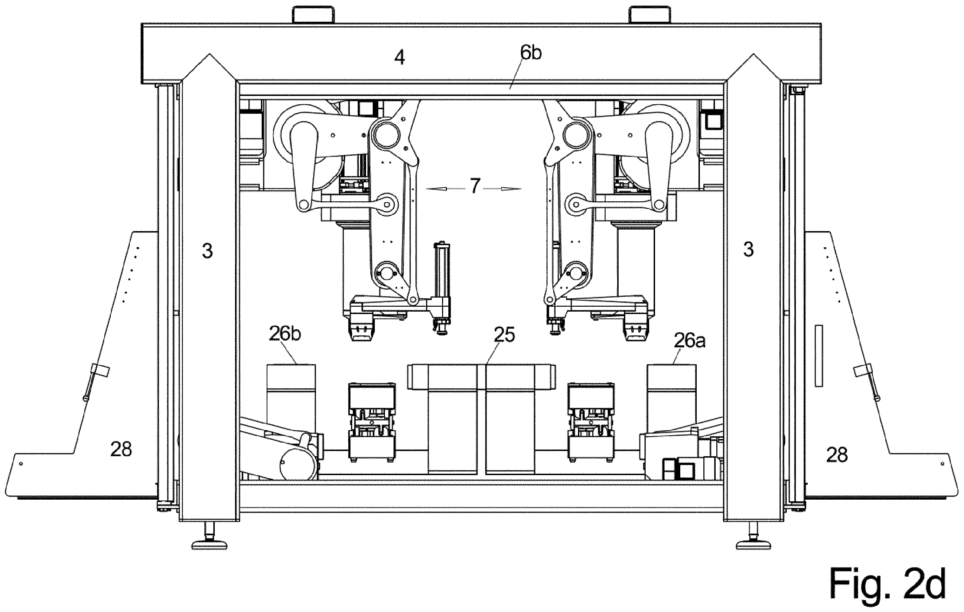

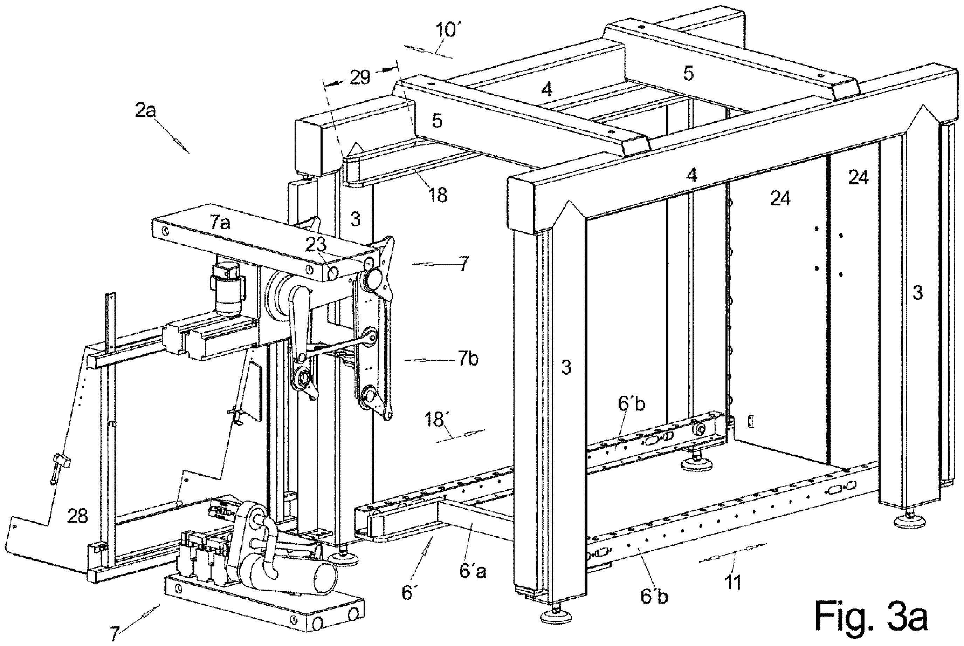

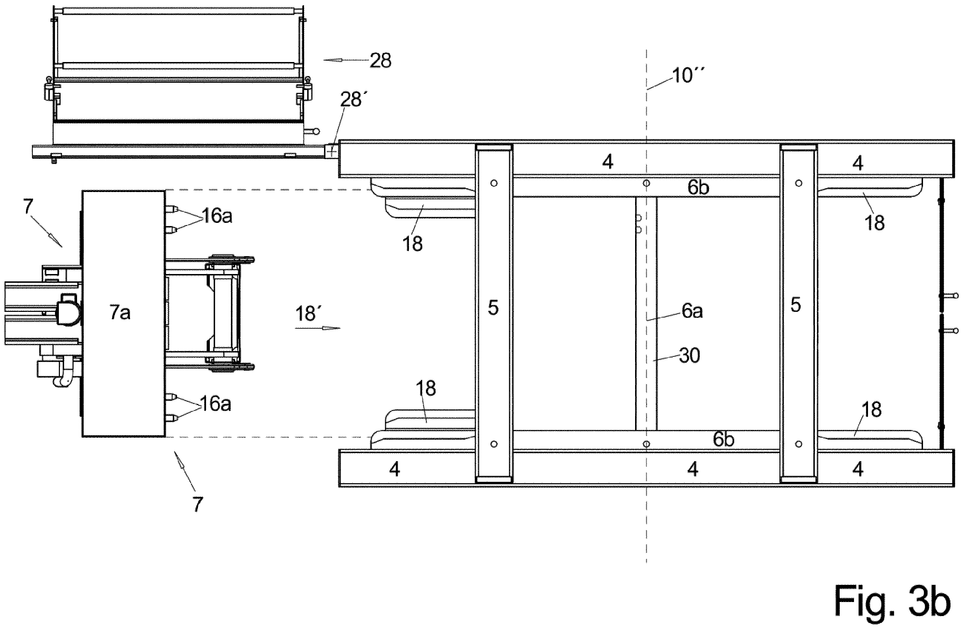

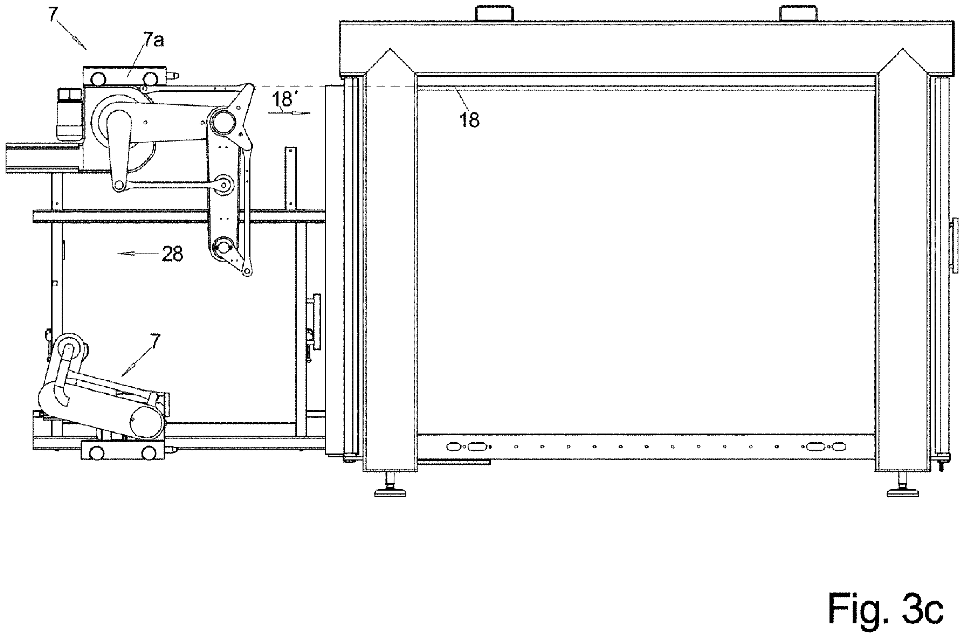

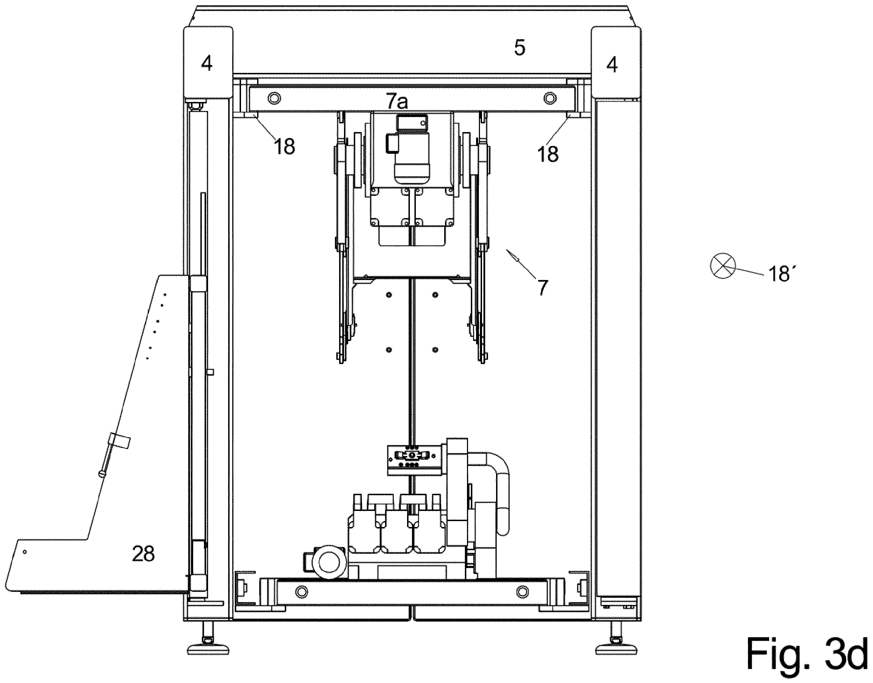

Die **Figuren 2** zeigen eine Verpackungsstraße 1 einer anderen Bauform des Grundgestells 2, und die **Figuren 3** das Wechseln eines Roboters an einem der Gestell-Module.

Der wesentliche Unterschied des Grundgestells 2 in den **Figuren 2a bis 2d** und auch dem einzelnen Modul gemäß der **Figuren 3** besteht darin, dass dabei die oberen in Durchlaufrichtung der Verpackungsstraße 1 verlaufenden Längstraversen 4 in Querrichtung der Verpackungsstraße 1 und damit jedes einzelnen Moduls von den äußeren Enden der Quertraversen 5 nach Innen versetzt sind. Die Tragsäulen 3 stützen die Quertraversen 5 dagegen auch hier nahe deren äußeren Enden ab.

Zusätzlich sind bei der Verpackungsstraße 1 in **Figur 2a** bei den Gestell-Modulen 2c bis 2e auch die Sicherheitstüren 24 im geschlossenen Zustand eingezeichnet, die den Freiraum zwischen den Tragsäulen 3 jedes Moduls verschließen und dadurch den Zugang von unberechtigten Personen während des Betriebes der Verpackungsstraße 1 in deren Inneres verhindern.

Des Weiteren sind hier die beidseits des Produkt-Bandes 25 laufenden beiden Behälterbänder 26a, b so ausgebildet, dass deren Rücklauf-Trum unterhalb des Behälterbandes 25 verläuft.

Bei der Verpackungsstraße 1 werden bei den ersten beiden Gestell-Modulen 2a, b mittels der dortigen Roboter jeweils Karton-Zuschnitte aus dem ebenen Zustand zu einem Karton aufgerichtet.

Deshalb ist an den Längs-Außenseiten der beiden Gestell-Module 2a, b jeweils ein Teil eines Zuschnitt-Magazins 28 vorhanden, welches im Betrieb einen Stapel aufeinanderliegender Zuschnitte enthält, die nacheinander einzeln von dem dortigen Roboter 7 ergriffen und mittels Hindurchdrücken durch eine nicht dargestellte Aufrichte-Matrize zu einem oben offenen Karton aufgerichtet und verklebt wird.

Die aufgerichteten Kartons werden auf eines der Behälter-Bänder 26a, b gestellt und von diesem in den **Figuren 2a****,** **b****,** **c** von links nach rechts transportiert, während auf dem Produktband 25 im Gegenlauf, also in Durchlaufrichtung 10' von rechts nach links, Produkte angeliefert werden, die von in den Figuren 2a, b nicht dargestellten Robotern in die aufgerichteten Kartons umgesetzt werden.

Im Gestell-Modul 2e wird der gefüllte Karton geschlossen und gegebenenfalls umgesetzt auf ein anderes Transportmittel.

Ebenso wie in den Figuren 1 sind auch - wie am Besten in **Figur 2b** ersichtlich - beidseits der Längsmitte einander gegenüberliegend je zwei Roboter 7 an der gleichen Längsposition vorhanden, wie auch in **Figur 2d** gut zu erkennen.

In den **Figuren 3a bis 3d** ist der Wechsel eines der Roboter 7 an dem ersten Gestell-Modul 2a dargestellt:
Damit der Roboter 7 in Querrichtung zur Durchlaufrichtung 10' der Verpackungsstraße entnommen werden kann, muss zunächst ggfs. das an der Längsseitenfläche dieses Moduls 2a vorhandene Zuschnitt-Magazin 28 von dort entfernt werden, um den Zugang auf dieser Seite für eine - hier aus Übersichtlichkeitsgründen nicht dargestellte - Liefervorrichtung 50, die den neuen Roboter 7 anliefert, zu gewähren.

In diesem Fall kann das Zuschnitt-Magazin 28 um eine aufrechte Achse zwischen den seitlich nach außen überstehenden oberen und unteren Quertraverse 4 um 90° nach außen geschwenkt werden, wie am besten in **Figur 3d** **und** **3b** zu erkennen - wodurch die Seitenfläche frei wird. Auch die hier nicht mehr dargestellten Sicherheitstüren 24 auf dieser Seite, die sich meist im Höhenbereich oberhalb des Zuschnitt-Magazins 28 befinden, müssen in gleicher Art und Weise aufgeklappt werden.

Auch bei dieser Bauform verlaufen unter den Längstraversen 5 des Gestell-Moduls 2a montierte, in Querrichtung 11' der Verpackungsstraße 1 verlaufende, zwei Lieferführungen 18, von denen sich jede nahe einer der beiden Quertraversen 4 befindet, die jeweils in Querrichtung 11' betrachtet einen unteren, nach Innen weisenden Schenkel als Auflagefläche aufweisen und in einem solchen Abstand zueinander montiert sind, dass die Roboter-Basis 7a, von der der Rest des Roboters 7 nach unten herabhängt einschließlich des Roboterarmes 7b, mit seinen in und entgegen der Durchlaufrichtung 10' weisenden beidseitigen Enden darauf aufgelegt werden kann.

Zu diesem Zweck weist die in diesem Fall etwa plattenförmige, horizontal liegende Roboter-Basis 7a in ihren seitlichen, in und entgegen der Durchlaufrichtung 10' weisenden, Enden jeweils zwei nach unten überstehende Rollen 23 auf, mit denen die Roboter-Basis 7a nach Aufsetzen auf der Auflagefläche der Liefer-Führungen 18 weiter in Richtung Längsmittelebene 10" gerollt werden kann.

Wie am besten **Figur 3a** erkennen lässt, ist der Rückversatz 29, um den die Längstraversen 5 des Grundgestells 2, also jedes Gestell-Moduls wie etwa 2a, gegenüber den freien Enden der Lieferschienen 18 mindestens so groß wie die Erstreckung der Roboter-Basis 7a in der Querrichtung 11' der Verpackungsstraße 1 im montierten Zustand bzw. im Anlieferungszustand.

In **Figur 3a** ist dabei noch der vorher ausgebaute defekte Roboter 7 am Boden liegend dargestellt.

Da sich im Bereich dieses Rückversatzes 29 oberhalb des nach untern ragenden Schenkels der Lieferschiene 18 kein Hindernis befindet, kann der neue Roboter 7 in einer Höhenlage mit der Roboter-Basis 7a und damit den dortigen Rollen 23 oberhalb dieses unteren Schenkels der Auflagefläche 18 bis nahe an die Längstraverse 5 heran transportiert werden - beispielsweise mit einem Lieferfahrzeug 50 wie in den **Figuren** 1 dargestellt - und dann auf die Auflagefläche der beiden Liefer-Schienen 18 beidseits aufgelegt werden, wie am besten in **Figur 3b** zu erkennen.

Die Lieferschienen 18, die als U-Profil mit bei jedem Modul z.B. 2a gegeneinander weisender offener Seite in Querrichtung 11' verlaufen, und zwar im Wesentlichen über die gesamte Breite der Roboterstraße 1, weisen deshalb im Bereich des Rückversatzes 29 keinen oder einen in Querschnittsrichtung des Profils verkürzten frei endenden Schenkel des U-Profils auf, um das Absenken auf den unteren frei endenden Schenkel der Roboter-Basis 7 nicht zu behindern.

Die an der Roboter-Basis 7a hängenden restlichen Teile des Roboters 7 sind in Durchlaufrichtung 10' schmaler und stehen in dieser Richtung nicht über die Stirnflächen der Roboter-Basis 7a vor.

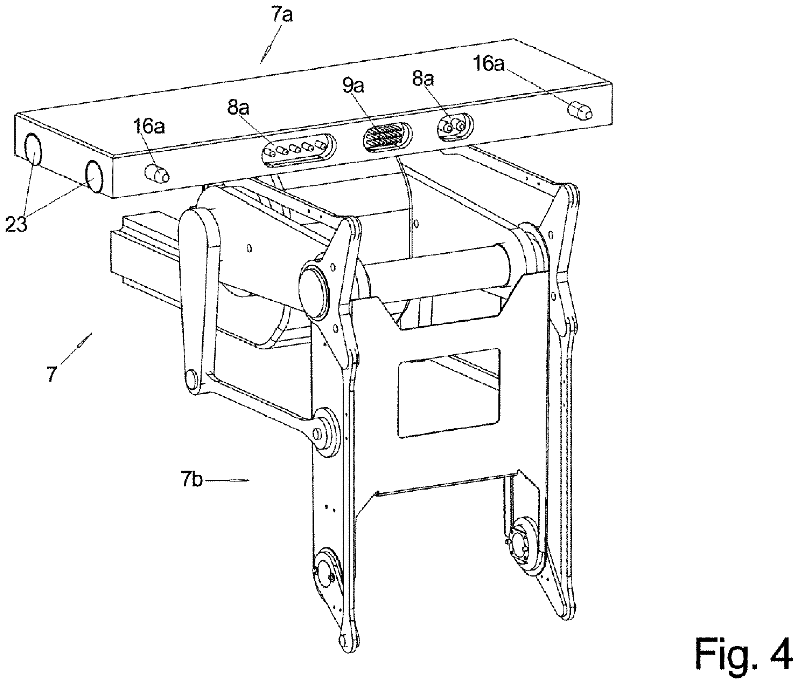

Die **Figur 4** zeigt den zu wechselnden Roboter 7 einzeln, in perspektivischer Ansicht, mit Blick auf die der Längsmittelebene 10" zugewandten und in dieser Richtung verlaufende Frontseite der Roboter-Basis 7a.

Dabei ist zu erkennen, dass diese zwei beabstandet zueinander angeordnete, vorspringende Positionier-Zapfen 16a aufweist, die bei Vorwärtsschieben des Roboters 7 entlang der Lieferschienen 18 in entsprechende Rast-Vertiefungen 16b eintauchen und wegen ihrer konischen Form darin zentrieren, welche in der am besten in **Figur 3b** ersichtlichen Mitteltraverse 30, die ebenfalls in Durchlaufrichtung 10' der Verpackungsstraße 1 verläuft, ausgebildet sind.

Zwischen den Positionier-Zapfen 16a sind zwei Energieanschlüsse 8a, b beispielsweise für elektrischen Strom einerseits und Druckluft andererseits, sowie ein Daten-Anschluss 9a in der Frontfläche der Roboter-Basis 7a zu erkennen.

Diese geraten automatisch in Eingriff mit entsprechenden Gegenelementen in der Mitteltraverse 30, sobald die Positionier-Zapfen 16a dort einrasten.

In dieser eingerasteten und datentechnisch sowie energietechnisch gekoppelten Position kann die Roboter-Basis 7a und damit der gesamte Roboter 7 auch zusätzlich durch eine nicht dargestellte Fixier-Vorrichtung automatisch fixiert werden, insbesondere automatisch.

Die Roboter der **Figuren 1** bis **4** besitzen nur zwei Freiheitsgraden, indem Ober- und Unterarm nur in einer vertikalen, lotrecht zur Durchlaufrichtung 10' der Verpackungsstraße 1 liegenden Ebene verschwenkbar sind und an jedem Roboter zwei Roboterarme mit jeweils Unterarm und Oberarm gekoppelt sind.

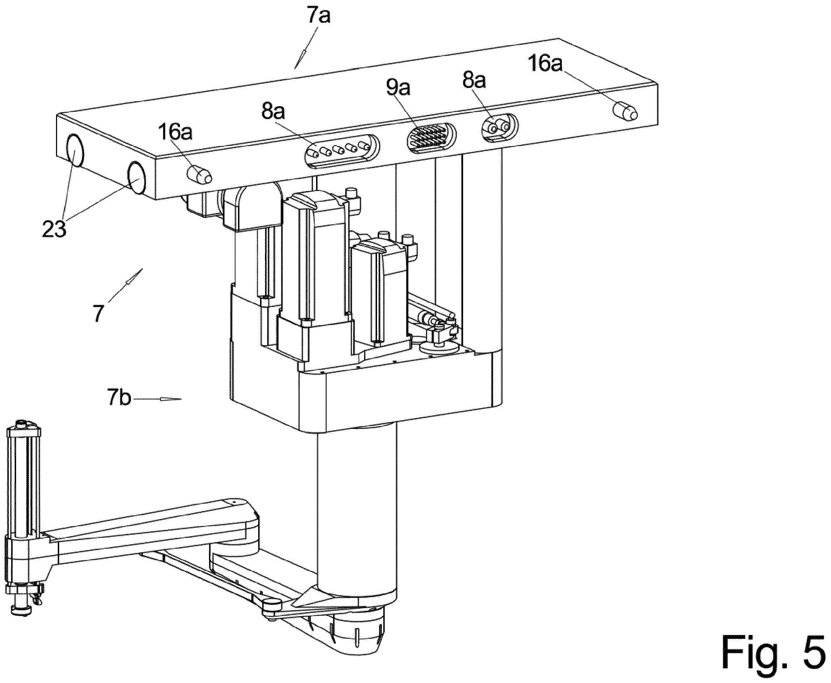

**Figur 5** zeigt eine andere Bauform des Roboters, die jedoch über die gleiche plattenförmige Roboter-Basis 7a mit allen daran beschriebenen Merkmalen wie Rollen 23, Energie- und Datenanschlüssen sowie Positionier-Zapfen verfügt, der von dieser Roboter-Basis 7a herabhängende Roboter jedoch über vier Freiheitsgrade verfügt, indem der dort einzige vorhandene Roboterarm mit Ober- und Unterarm in einer horizontalen Ebene verschwenkbar ist und am freien Ende des Unterarmes eine Hubeinheit trägt, die vertikal verstellbar sowie um die Vertikale drehbar ist und am unteren Ende ein Werkzeug wie etwa einen Sauger trägt.

Damit wird klar, dass an einer solchen Roboter-Basis 7a jede Art von daran hängendem Roboter 7 befestigt werden kann, und falls die Roboter 7 nicht hängend im Grundgestell angeordnet sind, sondern darauf stehend, diese auch auf der Roboter-Basis 7a aufsitzen können.

Anstelle eines Roboters kann auch eine beliebige andere Bearbeitungseinheit an einer solchen Roboter-Basis 7a vorhanden sein.

### BEZUGSZEICHENLISTE

- 1: Verpackungsstraße
- 1*: Steuerung, Steuerungs-Einheit
- 2: Grundgestell
- 2a, b, c: Gestell-Modul
- 3: Tragsäule
- 4: Längstraversen
- 5: Quertraversen
- 6: Tragwerk
- 7: Roboter
- 7a: Roboter-Basis
- 7b: Roboter-Arm
- 7c: Roboter-Führungsteil
- 8: Energie-Anschluss
- 9: Daten-Anschluss
- 10': Längsrichtung, Durchlaufrichtung der Verpackungsstraße
- 10: Querrichtung Roboter
- 11': horizontale Querrichtung Verpackungsstraße
- 11: Längsrichtung Roboter
- 12: vertikale Richtung, Vertikale
- 13: Koppel-Vorrichtung
- 14: Montage-Vorrichtung
- 15: Verlagerungs-Vorrichtung
- 16: Positionier-Vorrichtung
- 16 a, b: Positionier-Element
- 17: Fixier-Vorrichtung
- 17 a: Fixier-Zapfen
- 17 b: Fixier-Ausnehmung
- 18: Liefer-Führung
- 18': Liefer-Richtung
- 19: Liefer-Anschlag
- 20: Übergabe-Position
- 21: Montage-Position
- 21': Montage-Richtung
- 22: Montage-Anschlag
- 23: Rolle
- 24: Sicherheitstür
- 25: Produktband
- 26a, b: Behälterband
- 27: Arbeitsbereich
- 28: Zuschnitt-Magazin
- 29: Rückversatz
- 30: Mitteltraverse

- 50: Liefer-Vorrichtung, Liefer-Fahrzeug
- 51a, b: Hubzinken

- P: Produkt
- T: Tray

## Patentansprüche

1. **Verpackungsstraße (1),** ausgestaltet zum wenigstens teilweise automatischen Wechseln eines von mehreren Robotern (7), wobei die Verpackungsstraße aufweist
- ein Grundgestell (2),
- mehrere Roboter (7), die in Durchlaufrichtung (10) der Verpackungsstraße (1) hintereinander am Grundgestell (2) befestigt sind
- eine Steuerung (1*) zum Steuern zumindest aller Roboter (7) der Verpackungsstraße (1),
**gekennzeichnet durch**
- jeweils eine Roboter-Basis (7a) mit daran befestigtem Roboter-Arm (7b) des Roboters (7),
- eine Montage-Vorrichtung (14) zum automatischen Montieren oder Demontieren des Roboters (7) an einer definierten Montage-Position, mit
- einer Positionieren-Vorrichtung zum exakten automatischen Positionieren an der Montage-Position und
- einer Fixier-Vorrichtung zum automatischen mechanischen Fixieren des Roboters an der Montage-Position,
- eine Koppel-Vorrichtung (13) zum automatischen, Koppeln oder Entkoppeln des Daten-Anschlusses (9a) sowie des Energie-Anschlusses (8a) jedes Roboters (7) gegenüber entsprechenden Gegen-Anschlüssen (8b, 9b) der Verpackungsstraße (1),
- wobei die Steuerung (1*) in der Lage ist, zumindest die für den wenigstens teilweise automatischen Wechselvorgang eines Roboters (7) notwendigen, Verpackungsstraßen-seitigen, Vorgänge zu steuern.

2. Verpackungsstraße nach Anspruch 1,
**dadurch gekennzeichnet, dass**
- die Verpackungsstraße eine Liefer-Vorrichtung (50) umfasst,
- die insbesondere getrennt von dem Rest der Verpackungsstraße (1) und/oder selbstfahrend, insbesondere auf dem Untergrund selbstfahrend, ausgebildet ist.

3. Verpackungsstraße nach einem der vorhergehenden Ansprüche,
**dadurch gekennzeichnet, dass**
die Montage-Vorrichtung (14)
- eine Positionier-Vorrichtung (16) zum automatischen exakten Positionieren des Roboters (7) an der Montage-Position (21)
und/oder
- eine Fixier-Vorrichtung (17) zum automatischen mechanischen Fixieren des Roboters (7) an der Montage-Position (21)
und/oder
- eine Verlagerungs-Vorrichtung (15), insbesondere eine Hub-Vorrichtung (15), zum Verlagern des Roboters (7) von einer Übergabe-Position (20) in eine Montage-Position (21)
umfasst.

4. Verpackungsstraße nach einem der vorhergehenden Ansprüche,
**dadurch gekennzeichnet, dass**
ein Teil der Montage-Vorrichtung (14), insbesondere die Verlagerungs-Vorrichtung (15), Bestandteil der Liefer-Vorrichtung (50) ist.

5. Verpackungsstraße nach einem der vorhergehenden Ansprüche,
**dadurch gekennzeichnet, dass**
am Grundgestell (2)
- als Teil der Montage-Vorrichtung (14) Liefer-Führungen (18) zum Auflegen und/oder Verschieben und/oder seitlichen Führen des zu wechselnden Roboters (7) vorhanden sind, die in einer Liefer-Richtung (18') verlaufen,
- insbesondere als Teil der Positionier-Vorrichtung (16) ein Übergabe-Anschlag (19) für den einzubringende Roboter (7) vorhanden ist, der insbesondere in der Liefer-Richtung (18') wirksam ist.

6. Verpackungsstraße nach einem der vorhergehenden Ansprüche,
**dadurch gekennzeichnet, dass**
- eine Liefer-Führung (18), insbesondere ein Paar von parallel verlaufenden, zueinander beabstandeten Liefer-Führungen (18), an jeder Roboter-Position im Grundgestell (2) vorhanden ist
und/oder
- jede Liefer-Führung (18), insbesondere Paar von Liefer-Führungen (18), Bestandteil der Verlagerung-Vorrichtung (15), insbesondere der Hub-Vorrichtung (15), ist und zusammen mit dem auf der wenigstens einen Liefer-Führung (18) lastenden Roboter (7) verlagerbar ist.

7. Verpackungsstraße nach einem der vorhergehenden Ansprüche,
**dadurch gekennzeichnet, dass**
- jede Montage-Position (21) für Roboter (7) eine eigene Kennung, insbesondere Kenn-Nummer, besitzt und/oder ebenfalls jeder Roboter (7)
und/oder
- jeder Roboter (7) einen, insbesondere nur einen, Server-Verstärker für alle Motoren des Roboters (7) gemeinsam aufweist,
und/oder
- die Zentral-Steuerung (1*) der Verpackungsstraße (1), vorzugsweise nur, das Programm für den jeweiligen Verpackungs-Auftrag an die jeweiligen Sub-Steuerungen (VMS) verteilt, die jeweils eine Gruppe von Robotern (7) steuern. (Testprogramm).

8. **Verfahren** zum wenigstens teilweise automatischen Wechseln eines Roboters (7) mit einer Roboter-Basis (7a) mit daran befestigtem Roboter-Arm (7b) an einer Verpackungsstraße (1) nach Anspruch 1, die mehrere Roboter (7) umfasst, indem
a) der Daten-Anschluss (9) sowie der Energie-Anschluss (8) zwischen dem zu entfernenden, alten Roboter (7) und dem Rest der Verpackungsstraße (1) automatisch gelöst wird,
b) die mechanischen Verbindungen zwischen dem alten Roboter (7) und dem Rest der Verpackungsstraße (1) automatisch gelöst werden,
c) der alte Roboter (7) von seiner Montageposition (21) automatisch aus der Verpackungsstraße (1) entfernt wird,
d) der neue Roboter (7) bis zu der Montageposition (21) in die Verpackungsstraße (1) eingebracht wird,
e) der neue Roboter (7) gegenüber der Verpackungsstraße (1) automatisch gekoppelt und fixiert wird,
f) der Daten-Anschluss (9a) sowie der Energie-Anschluss (8a) des neuen Roboters (7) mit den entsprechenden Gegen-Anschlüssen (8b, 9b) der Verpackungsstraße (1) automatisch gekoppelt wird.

9. Verfahren nach Anspruch 8,
**dadurch gekennzeichnet, dass**
- im Schritt c) der alte Roboter (7) zunächst zu einer Übergabe-Position (20) der Verpackungsstraße (1) und von dort automatisch aus der Verpackungsstraße (1) entfernt wird
und/oder
- im Schritt d) der neue Roboter (7) zunächst zu einer Übergabe-Position (20) der Verpackungsstraße (1) und von dort automatisch zu einer Montage-Position (21) verbracht wird.

10. Verfahren nach Anspruch 8 oder 9,
**dadurch gekennzeichnet, dass**
- die Übergabe-Position (20) die Montage-Position (21) ist und
- die Schritte e) und f) an der Übergabe-Position (20) durchgeführt werden, und/oder
- spätestens beginnend mit Schritt b) der alte Roboter (7) und während der Schritte d) und e) der neue Roboter (7) vertikal abgestützt wird.

11. Verfahren nach einem der vorhergehenden Verfahrensansprüche,
**dadurch gekennzeichnet, dass**
- im Schritt c) der alte Roboter (7) in einer Entnahme-Richtung (18'b), die quer zur Längsrichtung (10) der Verpackungsstraße (1) verläuft, aus dieser entfernt wird
und/oder
- im Schritt d) der neue Roboter (7) in einer Anliefer-Richtung (18'a), die quer zur Längsrichtung (10') der Verpackungsstraße (1) verläuft, in diese eingebracht wird,
- insbesondere die Entnahme-Richtung (18'b) und die Anliefer-Richtung (18'a) in der gleichen Liefer-Richtung (18'), jedoch entgegengesetzt, verlaufen.

12. Verfahren nach einem der vorhergehenden Verfahrensansprüche,
**dadurch gekennzeichnet, dass**
- das Entfernen und/oder Einbringen des Roboters (7) durch Einschieben entlang von in einer Liefer-Richtung (18') verlaufenden Liefer-Führungen (18) erfolgt, die am Grundgestell (2) der Verpackungsstraße (1) vorhanden sind
und/oder
- das Einbringen bis zur Übergabe-Position (20) und/oder Montage-Position (21) bis zu einem in Anliefer-Richtung (18'a) wirksamen Anliefer-Anschlag (19) vorgegeben wird.

13. Verfahren nach einem der vorhergehenden Verfahrensansprüche,
**dadurch gekennzeichnet, dass**
- zwischen der Übergabe-Position (20) und der Montage-Position (21) der Roboter (7) in einer Montage-Richtung (21'), die insbesondere quer zur Liefer-Richtung (18') verläuft, insbesondere in der Vertikalen (12), automatisch verlagert wird,
- insbesondere beim Einbringen eines neuen Roboters (7) dieses von der Übergabe-Position (20) zur Montage-Position (21) automatisch angehoben oder abgesenkt wird, insbesondere bis zu einem Montage-Anschlag (22).

14. Verfahren nach einem der vorhergehenden Verfahrensansprüche,
**dadurch gekennzeichnet, dass**
- während Schritt e) der Roboter (7) automatisch exakt gegenüber dem Grundgestell (2) positioniert wird,
- insbesondere mittels mechanischer Positionier-Elemente (16a, b), insbesondere Zentrier-Elemente (16a, b),
und/oder
- nach Schritt e) die Position des Roboters (7) im Grundgestell (2) automatisch ermittelt wird.

15. Verfahren nach einem der vorhergehenden Verfahrensansprüche,
**dadurch gekennzeichnet, dass**
- vor Schritt d) der neue Roboter (7), sofern es unterschiedliche räumliche Zustände einnehmen kann, in einen kompakten, insbesondere seinen kompaktesten, Zustand verbracht wird,
- in dem es in mindestens einer Raumrichtung, vorzugsweise in allen Raumrichtungen, seine geringstmöglichen Abmessungen aufweist.

16. Verfahren nach einem der vorhergehenden Verfahrensansprüche,
**dadurch gekennzeichnet, dass**
- das Abtransportieren oder Anliefern eines Roboters (7) mittels einer Liefer-Vorrichtung (50) erfolgt, insbesondere automatisch erfolgt, wobei insbesondere,
- die Liefer-Vorrichtung (50) in der Lage ist, der neue Roboter (7) automatisch bis zur Übergabe-Position (20) in die Verpackungsstraße (1) einzubringen.

17. Verfahren nach einem der vorhergehenden Verfahrensansprüche,
**dadurch gekennzeichnet, dass**
- die Liefer-Vorrichtung (50) selbstfahrend auf dem Untergrund ausgebildet ist.

18. Verfahren nach einem der vorhergehenden Verfahrensansprüche,
**dadurch gekennzeichnet, dass**
- der Austausch des Roboters (7) durchgeführt wird, während der Rest der Verpackungsstraße (1) in Betrieb ist und lediglich der zu wechselnde Roboter (7) deaktiviert ist,
- insbesondere indem die Energieversorgung, insbesondere auch die Datenversorgung, des zu wechselnden Roboters (7) abgeschaltet und/oder vom Rest der Verpackungsstraße (1) getrennt ist.

## Claims

1. Packaging line (1) designed for at least partially automatic changing of one of a plurality of robots (7), the packaging line comprising
- a base frame (2),
- a plurality of robots (7) attached to the base frame (2) one after the other in the passage direction (10) of the packaging line (1),
- a control (1*) for controlling at least all robots (7) of the packaging line (1),
**characterized by**
- respectively a robot base (7a) with a robot arm (7b) of the robot (7) fastened thereto,
- an assembly device (14) for automatic assembly or disassembly of the robot (7) at a defined assembly position, with
- a positioning device for exact automatic positioning at the mounting position and
- a fixing device for automatic mechanical fixing of the robot at the mounting position,
- a coupling device (13) for automatically coupling or uncoupling the data connection (9a) and the power connection (8a) of each robot (7) with respect to corresponding counter connections (8b, 9b) of the packaging line (1),
- wherein the control (1*) is capable of controlling at least the operations necessary for the at least partially automatic changing operation of a robot (7) on the packaging line side.

2. Packaging line according to claim 1,
**characterized in that**
- the packaging line comprises a delivery device (50),
- which is designed in particular separately from the rest of the packaging line (1) and/or self-propelled, in particular self-propelled on the ground.

3. Packaging line according to one of the preceding claims,
**characterized in that**
the assembly device (14) comprises
- a positioning device (16) for automatic exact positioning of the robot (7) at the assembly position (21)
and/or
- a fixing device (17) for automatically mechanically fixing the robot (7) at the mounting position (21)
and/or
- a displacement device (15), in particular a lifting device (15), for displacing the robot (7) from a transfer position (20) to an assembly position (21).

4. Packaging line according to any of the preceding claims,
**characterized in that**
a part of the assembly device (14), in particular the displacement device (15), is part of the delivery device (50).

5. Packaging line according to one of the preceding claims,
**characterized in that**
on the base frame (2)
- as part of the assembly device (14), delivery guides (18) are present for placing and/or displacing and/or laterally guiding the robot (7) to be changed, which guides run in a delivery direction (18'),
- in particular, as part of the positioning device (16), a transfer stop (19) is present for the robot (7) to be introduced, which stop is effective in particular in the delivery direction (18').

6. Packaging line according to one of the preceding claims,
**characterized in that**
- a delivery guide (18), in particular a pair of parallel, spaced-apart delivery guides (18), is present at each robot position in the base frame (2)
and/or
- each delivery guide (18), in particular pair of delivery guides (18), is a component of the displacement device (15), in particular of the lifting device (15), and is displaceable together with the robot (7) bearing on the at least one delivery guide (18).

7. Packaging line according to one of the preceding claims,
**characterized in that**
- each assembly position (21) for robots (7) has its own identification, in particular identification number, and/or likewise each robot (7)
and/or
- each robot (7) has a server amplifier, in particular only one, common to all the motors of the robot (7)
and/or
- the central control (1*) of the packaging line (1) distributes, preferably only, the program for the respective packaging job to the respective sub-controls (VMS), each of which controls a group of robots (7). (Test program).

8. Method for at least partially automatically changing a robot (7) with a robot base (7a) with a robot arm (7b) fastened thereto on a packaging line (1) according to claim 1, which comprises a plurality robots (7), by
a) automatically disconnecting the data connection (9) and the power connection (8) between the old robot (7) to be removed and the rest of the packaging line (1),
b) automatically disconnecting the mechanical connections between the old robot (7) and the rest of the packaging line (1),
c) automatically removing the old robot (7) from its assembly position (21) from the packaging line (1),
d) introducing the new robot (7) into the packaging line (1) up to the assembly position (21),
e) automatically coupling and fixing the new robot (7) with respect to to the packaging line (1),
f) automatically coupling the data connection (9a) and the power connection (8a) of the new robot (7) to the corresponding counter connections (8b, 9b) of the packaging line (1).

9. Method according to claim 8,
**characterized in that**
- in step c) the old robot (7) is first moved to a transfer position (20) of the packaging line (1) and from there is automatically removed from the packaging line (1)
and/or
- in step d) the new robot (7) is first moved to a transfer position (20) of the packaging line (1) and from there is automatically brought to an assembly position (21).

10. Method according to claims 8 or 9,
**characterized in that**
- the transfer position (20) is the assembly position (21), and
- steps e) and f) are carried out at the transfer position (20),
and/or
- at the latest starting with step b) the old robot (7) and during steps d) and e) the new robot (7) is supported vertically.

11. Method according to one of the preceding method claims,
**characterized in that**
- in step c) the old robot (7) is removed from the packaging line (1) in a removal direction (18'b) which runs transversely to the longitudinal direction (10) of the packaging line (1)
and/or
- in step d) the new robot (7) is introduced into the packaging line (1) in a delivery direction (18'a) which runs transversely to the longitudinal direction (10') of the packaging line (1),
- in particular the removal direction (18'b) and the delivery direction (18'a) run in the same delivery direction (18') but in opposite directions.

12. Method according to one of the preceding method claims,
**characterized in that**
- the robot (7) is removed and/or introduced by pushing it along delivery guides (18) which run in a delivery direction (18') and are present on the base frame (2) of the packaging line (1)
and/or
- the introduction is predetermined up to the transfer position (20) and/or assembly position (21) up to a delivery stop (19) effective in the delivery direction (18'a).

13. Method according to one of the preceding method claims,
**characterized in that**
- between the transfer position (20) and the assembly position (21) the robot (7) is automatically displaced in an assembly direction (21') which in particular runs transversely to the delivery direction (18'), in particular in the vertical (12),
- in particular when introducing a new robot (7), the latter is automatically raised or lowered from the transfer position (20) to the assembly position (21), in particular up to an assembly stop (22).

14. Method according to one of the preceding method claims,
**characterized in that**
- during step e), the robot (7) is automatically positioned exactly with respect to the base frame (2),
- in particular by means of mechanical positioning elements (16a, b), in particular centering elements (16a, b),
and/or
- after step e) the position of the robot (7) in the base frame (2) is determined automatically.

15. Method according to one of the preceding method claims,
**characterized in that**
- before step d) the new robot (7), insofar as it can take different spatial states, is brought into a compact, in particular its most compact, state,
- in which it has its smallest possible dimensions in at least one spatial direction, preferably in all spatial directions.

16. Method according to one of the preceding method claims,
**characterized in that**
- the deportation or delivery of a robot (7) is carried out by means of a delivery device (50), in particular automatically, wherein in particular,
- the delivery device (50) is capable of automatically introducing the new robot (7) into the packaging line (1) up to the transfer position (20).

17. Method according to one of the preceding method claims,
**characterized in that**
- the delivery device (50) is designed to be self-propelled on the ground.

18. Method according to one of the preceding method claims,
**characterized in that**
- the replacement of the robot (7) is carried out while the rest of the packaging line (1) is in operation and only the robot (7) to be replaced is deactivated,
- in particular by the energy supply, in particular also the data supply, of the robot (7) to be replaced being switched off and/or disconnected from the rest of the packaging line (1).

## Revendications

1. **Ligne d'emballage** (1), adaptée pour changer au moins partiellement automatiquement l'un de plusieurs robots (7), la ligne d'emballage comprenant
- un châssis de base (2),
- plusieurs robots (7) qui sont fixés les uns derrière les autres sur le châssis de base (2) dans le sens de passage (10) de la ligne d'emballage (1)
- une commande (1*) pour commander au moins tous les robots (7) de la ligne d'emballage (1),
**caractérisée en ce que**
- une base de robot (7a) respective avec un bras de robot (7b) du robot (7) qui y est fixé,
- un dispositif de montage (14) pour le montage ou le démontage automatique du robot (7) à une position de montage définie, avec
- un dispositif de positionnement pour le positionnement automatique exact à la position de montage, et
- un dispositif de fixation pour la fixation mécanique automatique du robot à la position de montage,
- un dispositif de couplage (13) pour le couplage ou le découplage automatique du raccordement de données (9a) ainsi que du raccordement d'énergie (8a) de chacun des robots (7) par rapport aux raccordements opposés (8b, 9b) de la ligne d'emballage (1),
- dans lequel la commande (1*) est en mesure de commander au moins les opérations nécessaires pour le processus de changement au moins partiellement automatique d'un robot (7), du côté de la chaîne d'emballage.

2. Ligne d'emballage selon la revendication 1,
**caractérisée en ce que**
- la ligne d'emballage comprend un dispositif de livraison (50),
- qui est adapté en particulier séparé du reste de la ligne d'emballage (1) et/ou automoteur, en particulier automoteur sur le sol.

3. Ligne d'emballage selon l'une des revendications précédentes,
**caractérisée en ce que**
le dispositif de montage (14) comprend
- un dispositif de positionnement (16) pour le positionnement automatique et exact du robot (7) à la position de montage (21),
et/ou
- un dispositif de fixation (17) pour la fixation automatique et mécanique du robot (7) à la position de montage (21).
et/ou
- un dispositif de déplacement (15), en particulier un dispositif de levage (15), pour déplacer le robot (7) d'une position de transfert (20) à une position de montage (21).

4. Ligne d'emballage selon l'une des revendications précédentes,
**caractérisée en ce que**
une partie du dispositif de montage (14), notamment le dispositif de déplacement (15), fait partie du dispositif de livraison (50).

5. Ligne d'emballage selon l'une des revendications précédentes,
**caractérisée en ce que**
sur le châssis de base (2)
- en tant que partie du dispositif de montage (14), il existe des guides de livraison (18) pour poser et/ou déplacer et/ou guider latéralement le robot (7) à changer, qui s'étendent dans une direction de livraison (18'),
- en particulier une butée de transfert (19) pour le robot (7) à insérer est présente en tant que partie du dispositif de positionnement (16), laquelle est active en particulier dans la direction de livraison (18').

6. Ligne d'emballage selon l'une des revendications précédentes,
**caractérisée en ce que**
- un guide de livraison (18), en particulier une paire de guides de livraison (18) parallèles et espacés l'un de l'autre, est présent à chaque position du robot dans le châssis de base (2),
et/ou
- chaque guide de livraison (18), en particulier une paire de guides de livraison (18), fait partie du dispositif de déplacement (15), en particulier du dispositif de levage (15), et peut être déplacé en même temps que le robot (7) qui repose sur ledit au moins un guide de livraison (18).

7. Ligne d'emballage selon l'une des revendications précédentes,
**caractérisée en ce que**
- chaque position de montage (21) pour les robots (7) possède sa propre identification, en particulier un numéro d'identification, et/ou également chaque robot (7) possède son propre numéro d'identification,
et/ou
- chaque robot (7) présente un, notamment un seul, amplificateur serveur pour tous les moteurs du robot (7) en commun,
et/ou
- la commande centrale (1*) de la ligne d'emballage (1) distribue, de préférence uniquement, le programme pour la commande d'emballage respective aux sous-commandes respectives (VMS), qui commandent chacune un groupe de robots (7). (Programme de test).

8. **Procédé** pour le remplacement au moins partiellement automatique d'un robot (7) avec une base de robot (7a) avec un bras de robot (7b) fixé à celle-ci sur une ligne d'emballage (1) selon la revendication 1, qui comprend plusieurs robots (7), en ce que
a) le raccordement de données (9) ainsi que le raccordement d'énergie (8) entre l'ancien robot (7) à enlever et le reste de la ligne d'emballage (1) sont automatiquement déconnectées,
b) les raccordements mécaniques entre l'ancien robot (7) et le reste de la ligne d'emballage (1) sont automatiquement déconnectées,
c) l'ancien robot (7) est automatiquement retiré de sa position de montage (21) de la ligne d'emballage (1),
d) le nouveau robot (7) est introduit dans la ligne d'emballage (1) jusqu'à la position de montage (21),
e) le nouveau robot (7) est automatiquement couplé et fixé par rapport à la ligne d'emballage,
f) le raccordement de données (9a) ainsi que le raccordement d'énergie (8a) du nouveau robot (7) sont couplés automatiquement avec les raccordements opposés correspondants (8b, 9b) de la ligne d'emballage (1).

9. Procédé selon la revendication 8,
**caractérisé en ce que**
- à l'étape c), l'ancien robot (7) est d'abord amené à une position de transfert (20) de la ligne d'emballage (1) et, de là, est automatiquement retiré de la ligne d'emballage (1),
et/ou
- à l'étape d) le nouveau robot (7) est d'abord amené à une position de transfert (20) de la ligne d'emballage (1) et de là automatiquement à une position de montage (21).

10. Procédé selon la revendication 8 ou 9,
**caractérisé en ce que**
- la position de transfert (20) est la position de montage (21) et
- les étapes e) et f) sont effectuées à la position de transfert (20),
et/ou
- au plus tard à partir de l'étape b), l'ancien robot (7) et, pendant les étapes d) et e), le nouveau robot (7) sont soutenus verticalement.

11. Procédé selon l'une des revendications de procédé précédentes,
**caractérisé en ce que**
- à l'étape c), l'ancien robot (7) est retiré de la ligne d'emballage (1) dans une direction de retrait (18'b) qui s'étend transversalement à la direction longitudinale (10) de la ligne d'emballage (1),
et/ou
- à l'étape d), le nouveau robot (7) est introduit dans la ligne d'emballage (1) dans une direction de livraison (18'a) qui s'étend transversalement à la direction longitudinale (10') de la ligne d'emballage (1),
- en particulier, la direction de retrait (18'b) et la direction de livraison (18'a) s'étendent dans la même direction de livraison (18'), mais de manière opposée.

12. Procédé selon l'une des revendications de procédé précédentes,
**caractérisé en ce que**
- Le retrait et/ou l'introduction du robot (7) se font par insertion le long de guides de livraison (18) s'étendant dans une direction de livraison (18'), qui sont présents sur le châssis de base (2) de la ligne d'emballage (1)
et/ou
- l'introduction jusqu'à la position de transfert (20) et/ou la position de montage (21) est prédéfinie jusqu'à une butée de transfert (19) active dans la direction de livraison (18'a).

13. Procédé selon l'une des revendications de procédé précédentes,
**caractérisé en ce que**
- entre la position de transfert (20) et la position de montage (21), le robot (7) est déplacé automatiquement dans une direction de montage (21'), qui s'étend notamment transversalement à la direction de livraison (18'), en particulier dans la verticale (12),
- en particulier lors de l'introduction d'un nouveau robot (7), celui-ci est soulevé ou abaissé automatiquement de la position de transfert (20) à la position de montage (21), en particulier jusqu'à une butée de montage (22).

14. Procédé selon l'une des revendications de procédé précédentes,
**caractérisé en ce que**
- pendant l'étape e), le robot (7) est automatiquement positionné avec précision par rapport au châssis de base (2),
- notamment au moyen d'éléments de positionnement mécaniques (16a, b), en particulier d'éléments de centrage (16a, b),
et/ou
- après l'étape e), la position du robot (7) dans le châssis de base (2) est déterminée automatiquement.

15. Procédé selon l'une des revendications de procédé précédentes,
**caractérisé en ce que**
- avant l'étape d), le nouveau robot (7), dans la mesure où il peut prendre différents états spatiaux, est placé dans un état compact, notamment son état le plus compact,
- dans lequel il présente ses dimensions les plus réduites possibles dans au moins une direction spatiale, de préférence dans toutes les directions spatiales.

16. Procédé selon l'une des revendications précédentes,
**caractérisé en ce que**
- l'évacuation ou la livraison d'un robot (7) s'effectue au moyen d'un dispositif de livraison (50), en particulier de manière automatique, dans lequel notamment,
- le dispositif de livraison (50) est en mesure d'introduire automatiquement le nouveau robot (7) dans la ligne d'emballage (1) jusqu'à la position de transfert (20).

17. Procédé selon l'une des revendications de procédé précédentes,
**caractérisé en ce que**
- le dispositif de livraison (50) est adapté pour se déplacer automatiquement sur le sol.

18. Procédé selon l'une des revendications de procédé précédentes,
**caractérisé en ce que**
- le remplacement du robot (7) est effectué pendant que le reste de la ligne d'emballage (1) est en fonctionnement et que seul le robot (7) à remplacer est désactivé,
- en particulier **en ce que** l'alimentation en énergie, en particulier également l'alimentation en données, du robot (7) à remplacer est désactivée et/ou séparée du reste de la ligne d'emballage (1).
